# FASCICULE DE BREVET EUROPEEN

(11) **EP 3 507 481 B1**
(45) Date de publication et mention de la délivrance du brevet: **17.02.2021**
(21) Numéro de dépôt: 17768832.2
(22) Date de dépôt: 25.08.2017
(51) Int. Cl.: F02M 35/16

(54) **FILTRE A AIR A COUVERCLE AMELIORE POUR UNE LIGNE D'ADMISSION DE MOTEUR A COMBUSTION INTERNE**
LUFTFILTER MIT VERBESSERTER ABDECKUNG FÜR EINE ANSAUGLEITUNG EINES VERBRENNUNGSMOTORS
AIR FILTER WITH AN IMPROVED COVER FOR AN INTAKE LINE OF AN INTERNAL COMBUSTION ENGINE

(30) Priorité: 01.09.2016 FR 1658109
(43) Date de publication de la demande: 10.07.2019
(73) Titulaire: PSA Automobiles SA, 78300 Poissy (FR)
(72) Inventeur: MASSE, Frederic, 92400 Courbevoie (FR); PERQUIA, Maximilien, 78210 St Cyr L'Ecole (FR)
(86) Numéro de dépôt international: PCT/FR2017/052276
(87) Numéro de publication internationale: WO 2018/042111

(56) Documents cités:
- EP-A2- 1 990 530
- WO-A1-2013/129997
- US-A1- 2011 303 308
- US-A1- 2013 220 257

## Description

La présente invention porte sur un filtre à air à couvercle amélioré pour une ligne d'admission de moteur à combustion interne. L'invention trouve une application particulièrement avantageuse, mais non exclusive, dans le domaine des véhicules automobiles.

De façon connue en soi, les filtres à air de moteur à combustion interne comportent une cuve et un couvercle fermant la cuve, voir par exemple le document EP 1 990 530 A2 ou le document US 2011/0303308 A1. Le couvercle est amovible pour permettre un remplacement de la cartouche filtrante logée à l'intérieur de la cuve. Le filtre comprend en outre une entrée qui est destinée à être en communication avec la façade avant du véhicule pour la prise d'air. Une sortie d'air filtré est destinée par exemple à être en communication avec un compresseur thermique ou électrique du moteur.

L'optimisation de l'espace autour du filtre à air impose de réduire les jeux de montage avec les pièces environnantes. Les filtres à air sont donc de plus en plus difficiles à implanter dans l'espace sous-capot du fait de nombreuses interférences avec des pièces moteur. Suivant certaines configurations de moteur, il peut ainsi être nécessaire de démonter certaines pièces environnantes pour accéder au filtre à air afin de changer la cartouche filtrante. Il en découle alors un temps conséquent pour le démontage et le remontage du filtre à air et un coût de main d'œuvre important lors des opérations de maintenance du véhicule. Dans d'autre cas, des obstacles peuvent même rendre impossible l'accès à la cartouche filtrante.

L'invention vise à remédier efficacement à cet inconvénient en proposant un filtre à air pour une ligne d'admission de moteur à combustion interne selon la revendication 1.

L'invention permet ainsi, du fait de la réalisation du couvercle en deux parties distinctes, d'extraire la cartouche filtrante sans avoir à démonter d'autres pièces du moteur susceptibles de gêner la cinématique de démontage du couvercle. En outre, l'invention permet un gain de temps lors de l'échange de la cartouche filtrante. L'invention procure ainsi une modularité au filtre à air en autorisant une adaptation des dimensions des parties du couvercle à l'environnement moteur, en particulier en augmentant ou en diminuant la hauteur de la partie supérieure du filtre en fonction de l'espace disponible.

Selon une réalisation, un premier joint est interposé entre la partie inférieure du couvercle et la cuve.

Selon une réalisation, le premier joint est porté par la cartouche filtrante.

Selon une réalisation, un deuxième joint est interposé entre la partie supérieure et la partie inférieure du couvercle. Cela permet d'assurer l'étanchéité entre ces deux parties du couvercle.

Selon une réalisation, le deuxième joint est porté par la partie supérieure du couvercle.

Selon une réalisation, le deuxième joint s'étend suivant toute une périphérie d'une interface de jonction entre la partie supérieure et la partie inférieure du couvercle.

Selon une réalisation, la partie supérieure et la partie inférieure du couvercle sont maintenues serrées dans un état assemblé par des organes de fixation, notamment par des moyens mécaniques de type clipsage, vissage ou de type sauterelles, de préférence par clipsage.

Selon une réalisation, la partie inférieure du couvercle et la cuve sont maintenues assemblées par des organes de fixation, notamment par des moyens mécaniques de clipsage, vissage ou de type sauterelles, de préférence par des vis ou des sauterelles.

Selon une réalisation, une interface de jonction entre la partie supérieure et la partie inférieure du couvercle s'étend suivant un plan, lequel est sensiblement parallèle à un plan dans lequel se situe une ouverture de la cuve.

Selon l'invention, le filtre à air de l'invention comprend un raccord de conduite d'air rapporté sur ou intégré au couvercle, ledit raccord présentant de préférence une section ronde ou ovale.

Selon l'invention, le raccord de conduite est rapporté sur ou intégré à la partie inférieure du couvercle.

Selon l'invention, la partie inférieure du couvercle présente une hauteur d'au moins 40 mm, notamment d'au moins 45 ou 50 mm.

Selon l'invention, le raccord de conduite présente une section dont la dimension mesurée selon la hauteur de la partie inférieure du couvercle est d'au moins 35 mm, et notamment de 40 mm.

L'invention a également pour objet un procédé de démontage d'un filtre à air pour une ligne d'admission d'un moteur à combustion interne tel que précédemment défini, le procédé comportant, lorsqu'un obstacle empêche un démontage simultané des deux parties du couvercle:
- une étape de désolidarisation de la partie supérieure du couvercle,
- une étape de désolidarisation de la partie inférieure du couvercle, et
- une étape d'extraction de la cartouche filtrante.

L'invention a également pour objet un moteur à combustion interne, notamment pour véhicule automobile, comportant un filtre à air tel que précédemment défini.

L'invention sera mieux comprise à la lecture de la description qui suit et à l'examen des figures qui l'accompagnent. Ces figures ne sont données qu'à titre illustratif mais nullement limitatif de l'invention.

La figure 1 est une représentation schématique d'un filtre à air comportant un couvercle en deux parties selon la présente invention;

Les figures 2a à 2d sont des représentations schématiques illustrant les différentes étapes de démontage du filtre à air selon l'invention pour remplacer la cartouche filtrante.

Les éléments identiques, similaires, ou analogues conservent la même référence d'une figure à l'autre. Par ailleurs, les termes relatifs du type "supérieur" ou "inférieur" sont entendus par référence à un filtre à air monté sur un moteur positionné dans un véhicule en condition d'utilisation sur un plan horizontal.

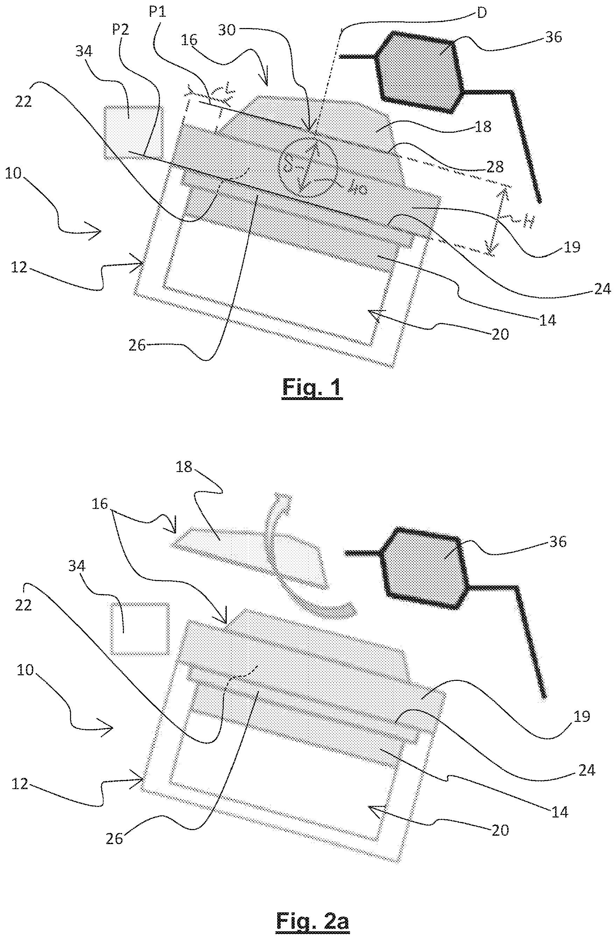

La figure 1 montre un filtre à air 10 pour une ligne d'admission d'un moteur à combustion interne, notamment de véhicule automobile. Le filtre à air 10 pourra être fixé sur la caisse du véhicule ou sur une pièce moteur, comme par exemple un couvre-culasse ou un déshuileur.

Le filtre à air 10 comporte une cuve 12 de forme creuse dans laquelle est logée une cartouche filtrante 14, par exemple de forme sensiblement parallélépipédique. La cuve 12 est fermée par un couvercle 16 comportant une partie supérieure 18 et une partie inférieure 19 positionnée entre la partie supérieure 18 et la cuve 12. Ces parties 18, 19 ferment la cuve 12 de façon amovible pour permettre un remplacement de la cartouche filtrante 14.

La cartouche filtrante 14 délimite avec la cuve 12 une chambre amont 20 et avec le couvercle 16 une chambre aval 22. Le filtre à air 10 comprend une entrée (non représentée) débouchant par exemple dans la chambre amont 20 du filtre 10 et destinée à être en communication avec la façade avant du véhicule pour la prise d'air. Une sortie (non représentée) pourra être ménagée dans une partie du couvercle 16. Ainsi, l'air ambiant canalisé par l'entrée d'air est admis dans la chambre amont 20, et l'air filtré par la cartouche filtrante 14 s'échappe du filtre 10, via la chambre aval 22, par la sortie qui pourra par exemple être en communication avec un compresseur thermique ou électrique.

De manière à assurer une première étanchéité du filtre à air 10, un premier joint 24 est interposé entre la partie inférieure 19 du couvercle 16 et la cuve 12. Ce joint 24 est implanté de préférence dans un rebord 26 de la cartouche 14 et est par exemple réalisé dans un matériau polymère, par exemple de type Polyuréthane. Lorsque le couvercle 16 est fixé sur la cuve 12 au moyen d'organes de fixation, tels que des vis, le joint 24 est écrasé entre le couvercle 16 et la cuve 12 pour assurer l'étanchéité de l'ensemble. En variante, le joint 24 est porté par un rebord de la cuve 12.

Un deuxième joint 28 est interposé entre la partie supérieure 18 et la partie inférieure 19 du couvercle 16 pour assurer une étanchéité entre les deux parties 18, 19 du couvercle 16. Le joint 28, par exemple de type torique, est porté par la partie supérieure 18 du couvercle 16. De préférence, le joint 28 s'étend suivant toute une périphérie d'une interface de jonction 30 entre la partie supérieure 18 et la partie inférieure 19 du couvercle 16. En variante, le joint 28 pourra être porté par la partie inférieure 19.

Suivant un exemple de réalisation, l'interface de jonction 30 entre la partie supérieure 18 et la partie inférieure 19 du couvercle 16 s'étend suivant un plan P1, lequel est sensiblement parallèle à un plan P2 dans lequel se situe une ouverture de la cuve 12. Autrement dit, les deux parties 18, 19 sont empilées l'une sur l'autre suivant une direction D perpendiculaire au plan P2 d'ouverture de la cuve 12.

La partie supérieure 18 et la partie inférieure 19 du couvercle 16 pourront être maintenues serrées dans un état assemblé par des organes de fixation. Les organes de fixation pourront par exemple prendre la forme de vis permettant, lorsqu'elles sont serrées, d'écraser le joint 28 pour assurer l'étanchéité entre les deux parties 18, 19 du couvercle 16. Alternativement, un organe de maintien amovible, par exemple une sauterelle de configuration élastique, pourra assurer le maintien des parties 18, 19 du couvercle 16 entre elles.

La cuve 12 pourra en outre comporter des plots de découplage, réalisés par exemple dans un matériau élastique. Ces plots permettent d'assurer un découplage mécanique et vibratoire entre le filtre à air 10 et la pièce support du moteur ou la caisse du véhicule.

En variante, le couvercle 16 pourra être réalisé en plus de deux parties empilées les unes sur les autres suivant la direction D. Le nombre de partie dépend des besoins de l'application.

Quand une sortie d'air est prévue, comme évoqué ci-dessus, on munit la partie inférieure 19 du couvercle 16 d'un raccord 40 de conduite d'air, comme représenté en figure 1. Ce raccord peut être intégré à la partie inférieure 19 (moulage monobloc quand il est en matériau polymère notamment). Alternativement, le raccord peut être rapporté sur la partie inférieure du couvercle (collage, fixation mécanique, surmoulage). Ce raccord est donc disposé de façon à ce que la conduite se raccorde à ce raccord latéralement par rapport au couvercle dans son ensemble. Le raccord présente une section de préférence ronde (ou ovale). Sa section S est d'environ 40 mm, ce qui impose que la hauteur H de la partie inférieure 19 du couvercle soit d'au moins 40 mm, notamment d'au moins 45 mm pour pouvoir loger le raccord.

De la figure 1, on voit que la partie inférieure 19 du couvercle présente deux parties, celle connexe à la cuve en position assemblée, et qui présente un bord L par rapport à la seconde partie connexe à la partie supérieure 18 en position assemblée. Ce bord, ce décrochement, est de préférence d'environ 20 mm. La hauteur h de la partie connexe à la cuve est également d'environ 20 mm.

On assemble la partie inférieure 19 à la cuve 12 par des vis (par exemple 4 vis disposés aux quatre coins de la cuve), ou par des moyens de fixation rapide de type sauterelles. On assemble la partie inférieure 19 du couvercle à sa partie supérieure 18 par des moyens mécaniques de type clipsage.

On décrit ci-après le procédé de montage en usine du filtre à air 10. Après avoir déposé la cartouche filtrante 14 dans la cuve 12, la partie supérieure 18 du couvercle 16 est fixée sur la partie inférieure 19 de sorte que le joint 28 soit écrasé pour assurer l'étanchéité entre les deux parties du couvercle 18, 19. L'ensemble des deux parties 18, 19 est ensuite fixé sur la cuve 12 de manière à écraser le joint d'étanchéité 24 de la cartouche filtrante 14, afin d'assurer l'étanchéité du filtre à air 10. Comme indiqué précédemment, la fixation des deux parties 18, 19 sur la cuve 12 est assurée au moyen de vis ou d'un dispositif d'encliquetage. L'ensemble complet du filtre à air 10 est ensuite fixé sur le moteur ou sur la caisse du véhicule automobile via des vis coopérant par exemple avec des oreilles trouées issues de la cuve 12 et comportant des éventuels plots de découplage.

On décrit ci-après, en référence aux figures 2a à 2d, le procédé de démontage du filtre à air 10 lorsque ce dernier est implanté à proximité d'un auvent 36 et qu'un obstacle 34 positionné du côté opposé empêche un démontage simultané des deux parties 18, 19 du couvercle 16.

Dans un premier temps, alors que la cuve 12 est fixée sur le moteur ou sur la caisse du véhicule, la partie supérieure 18 du couvercle 16 est désolidarisée par rapport à la partie inférieure 19, tel que cela est illustré par la figure 2a. A cet effet, l'opérateur retire les vis, par exemple, assurant la fixation entre les deux parties 18, 19 du couvercle 16.

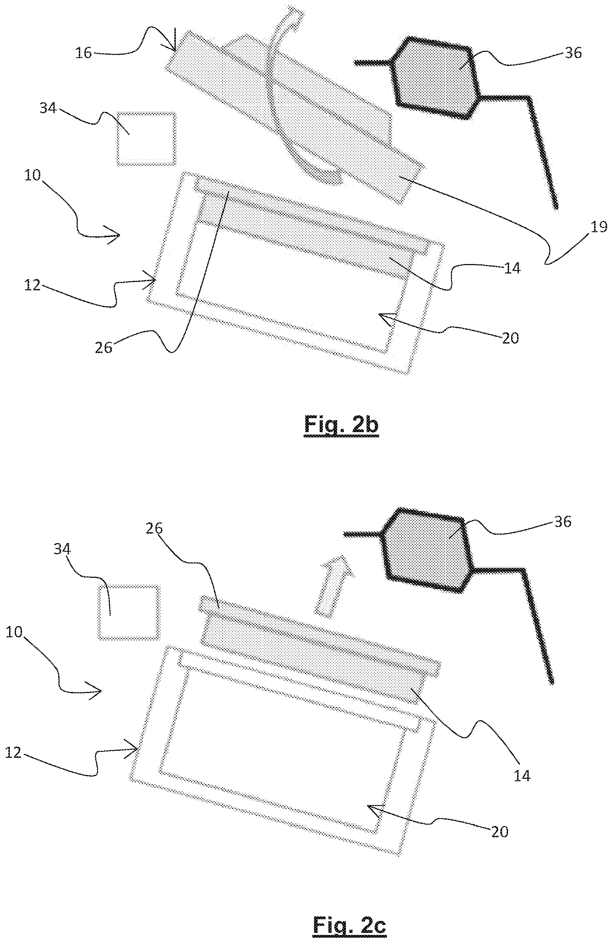

Puis, comme cela est illustré par la figure 2b, la partie inférieure 19 du couvercle 16 est désolidarisée à son tour en dévissant les vis, par exemple, entre la cuve 12 et la partie inférieure 19 du couvercle 16.

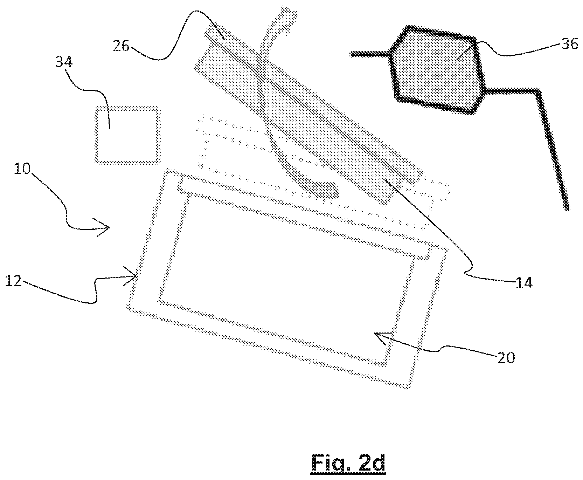

Comme cela est illustré par les figures 2c et 2d, la cartouche filtrante 14 est ensuite extraite pour ensuite procéder à son remplacement. Comme cela ressort des figures 2a à 2d, les différentes parties du couvercle 18,19 ainsi que la cartouche 14 auront pu passer sans difficultés entre l'auvent 36 et l'obstacle 34 au cours de la phase de démontage du fait du caractère modulable du filtre à air 10 selon l'invention.

Dans le cas où aucun obstacle n'empêche le démontage du filtre à air 10, l'ensemble du couvercle composé des parties 18 et 19 est désolidarisé de la cuve 12 qui reste fixée sur le moteur ou sur la caisse du véhicule. Le démontage est réalisé en dévissant les vis de fixation, par exemple, permettant l'assemblage du couvercle 16 avec la cuve 12. La cartouche filtrante 14 est alors démontée et changée. L'ensemble du couvercle 16 est ensuite remonté.

L'invention est ainsi également applicable à des environnements sous-capot dans lesquels les interférences entre les pièces sont réduites.

L'invention a également pour objet un moteur à combustion interne, notamment pour véhicule automobile, comportant le filtre à air tel que précédemment défini.

## Revendications

1. Filtre à air (10) pour une ligne d'admission de moteur à combustion interne, notamment de véhicule automobile, ledit filtre à air (10) comportant:
- une cuve (12),
- un couvercle (16) fermant ladite cuve (12),
- une cartouche filtrante (14) logée à l'intérieur de ladite cuve (12), et
- un raccord (40) de conduite d'air rapporté sur ou intégré au couvercle (16), ledit raccord présentant de préférence une section ronde ou ovale,
ledit couvercle (16) comportant au moins une partie supérieure (18) et une partie inférieure (19) positionnée entre ladite partie supérieure (18) et ladite cuve (12),
**caractérisé en ce que** la partie inférieure (19) du couvercle (16) présente une hauteur (H) d'au moins 40 mm, notamment d'au moins 45 ou 50 mm pour y connecter ou y intégrer le raccord (40) de conduite qui présente une section (S) dont la dimension mesurée selon la hauteur de la partie inférieure (19) du couvercle est d'au moins 35 mm, et notamment de 40 mm.

2. Filtre à air selon la revendication 1, **caractérisé en ce qu'**un premier joint (24) est interposé entre ladite partie inférieure (19) dudit couvercle (16) et ladite cuve (12).

3. Filtre à air selon la revendication 2, **caractérisé en ce que** ledit premier joint (24) est porté par ladite cartouche filtrante (14).

4. Filtre à air selon la revendication 1, **caractérisé en ce qu'**un deuxième joint (28) est interposé entre ladite partie supérieure (18) et ladite partie inférieure (19) dudit couvercle (16).

5. Filtre à air selon la revendication 4, **caractérisé en ce que** ledit deuxième joint (28) est porté par ladite partie supérieure (18) dudit couvercle (16).

6. Filtre à air selon la revendication 4 ou 5, **caractérisé en ce que** ledit deuxième joint (28) s'étend suivant toute une périphérie d'une interface de jonction (30) entre ladite partie supérieure (18) et ladite partie inférieure (19) dudit couvercle (16).

7. Filtre à air selon l'une quelconque des revendications précédentes, **caractérisé en ce que** ladite partie supérieure (18) et ladite partie inférieure (19) dudit couvercle (16) sont maintenues serrées dans un état assemblé par des organes de fixation, notamment par des moyens mécaniques de type clipsage, vissage ou de type sauterelles, de préférence par clipsage.

8. Filtre à air selon l'une quelconque des revendications précédentes, **caractérisé en ce que** la partie inférieure (19) du couvercle (16) et la cuve (12) sont maintenues assemblées par des organes de fixation, notamment par des moyens mécaniques de clipsage, vissage ou de type sauterelles, de préférence par des vis ou des sauterelles.

9. Filtre à air selon l'une quelconque des revendications précédentes, **caractérisé en ce qu'**une interface de jonction (30) entre ladite partie supérieure (18) et ladite partie inférieure (19) dudit couvercle (16) s'étend suivant un plan (P1), lequel est sensiblement parallèle à un plan (P2) dans lequel se situe une ouverture de ladite cuve (12).

10. Procédé de démontage d'un filtre à air (10) pour une ligne d'admission d'un moteur à combustion interne tel que défini selon l'une quelconque des revendications précédentes, ledit procédé comportant, lorsqu'un obstacle empêche un démontage simultané des deux parties (18, 19) dudit couvercle (16):
- une étape de désolidarisation de ladite partie supérieure (18) dudit couvercle (16),
- une étape de désolidarisation de ladite partie inférieure (19) dudit couvercle (16), et
- une étape d'extraction de ladite cartouche filtrante (14).

11. Moteur à combustion interne, notamment pour véhicule automobile, **caractérisé en ce qu'**il comporte un filtre à air (10) tel que défini selon l'une quelconque des revendications 1 à 9.

## Patentansprüche

1. Luftfilter (10) für eine Ansaugleitung eines Verbrennungsmotors, insbesondere eines Kraftfahrzeugs, wobei der Luftfilter (10), umfassend :
- ein Panzer (12),
- eine Abdeckung (16), die den Tank (12) schließt,
- eine Filterpatrone (14), die in dem Tank (12) untergebracht ist, und
- eine Luftkanalverbinder (40) befestigt oder integriert in die Abdeckung (16), wobei der Verbinder mit vorzugsweise einen runden oder ovalen Querschnitt, wobei die Abdeckung (16), umfassend mindestens ein Oberteil (18) und ein Teil senken (19), der zwischen dem oberen Teil (18) und der Tank (12), **dadurch gekennzeichnet, dass** der untere Teil (19) der Abdeckung (16) eine Höhe (H) von mindestens 40 mm, möglicherweise mindestens 45 oder 50 mm zum Verbinden oder Integrieren des Rohrverbinders (40) mit einem Abschnitt (S), dessen Abmessung gemessen an der Höhe des unteren Teils (19) der Abdeckung mindestens 35 mm und insbesondere 40 mm beträgt.

2. Luftfilter nach Anspruch 1, **dadurch gekennzeichnet, daß** eine erste Dichtung (24) angeordnet ist zwischen dem unteren
Teil (19) der genannten Abdeckung (16) und dem Tank (12).

3. Luftfilter nach Anspruch 2, **dadurch gekennzeichnet, dass** die erste Dichtung (24) durch geführt wird die Filterpatrone (14).

4. Luftfilter nach Anspruch 1, **dadurch gekennzeichnet, dass** eine zweite Dichtung (28) zwischen geschaltet ist dem oberen Teil (18) und dem unteren Teil (19) der genannten Abdeckung (16).

5. Luftfilter nach Anspruch 4, **dadurch gekennzeichnet, dass** die zweite Dichtung (28) von dem oberen Teil (18) der Abdeckung (16) getragen wird.

6. Luftfilter nach Anspruch 4 oder 5, **dadurch gekennzeichnet, dass** sich die zweite Dichtung (28) entlang eines gesamten Umfangs einer Verbindungsschnittstelle (30) zwischen dem oberen Teil (18) und dem unteren Teil (30) erstreckt 19) der Abdeckung (16).

7. Luftfilter nach einem der vorhergehenden Ansprüche, der **dadurch gekennzeichnet ist, dass** der obere Teil (18) und der untere Teil (19) der Abdeckung (16) insbesondere durch Befestigungselemente in einem zusammengebauten Zustand festgehalten werden durch mechanische Mittel vom Typ Clipping, Screwing oder Clamping, vorzugsweise durch Clipping.

8. Luftfilter nach einem der vorhergehenden Ansprüche, **dadurch gekennzeichnet, dass** der untere Teil (19) der Abdeckung (16) und dem Tank (12) zusammengehalten werden durch Befestigungselemente, insbesondere durch mechanische Mittel von Abschneiden, Schrauben oder vom Klemmtyp, vorzugsweise durch Schrauben oder Klammern.

9. Luftfilter nach einem der vorhergehenden Ansprüche, **dadurch gekennzeichnet, dass**
eine Kreuzung Schnittstelle (30) zwischen dem oberen Teil (18) und dem unteren Tei (19) der genannten Abdeckung (16) erstreckt entlang einer Ebene (P1), die zu einer Ebene im wesentlichen parallel (P2), in der eine Öffnung des genannten Tanks (12) angeordnet ist.

10. Verfahren zum Entfernen eines Luftfilters (10) für eine Ansaugleitung eines Verbrennungsmotors, wie in einem der vorhergehenden Ansprüche definiert, wobei das Verfahren umfasst, wenn ein Hindernis das gleichzeitige Entfernen des zwei Teile (18, 19) der genannten Abdeckung (16) :
- ein Schritt der Trennung von e des genannten Teil oberer (18) des Deckels des (16),
- ein Schritt der Trenn genannten unteren Teils (19) von dem Deckel (16), und
- einen Extraktionsschritt der Filterpatrone (14).

11. Verbrennungsmotor, insbesondere für ein Kraftfahrzeug, **dadurch gekennzeichnet, dass** er einen Luftfilter (10) umfasst, wie er nach einem der Ansprüche 1 bis 9 definiert ist.

## Claims

1. Air filter (10) for an intake line of an internal combustion engine, in particular of a motor vehicle, said air filter (10) comprising :
- a tank (12),
- a cover (16) closing said tank (12),
- a filter cartridge (14) housed inside said tank (12), and
- an air duct connector (40) attached to or integrated into the cover (16), said connector preferably having a round or oval section, said cover (16) comprising at least an upper part (18) and a part lower part (19) positioned between said upper part (18) and said tank (12), **characterized in that** the lower part (19) of the cover (16) has a height (H) of at least 40 mm, n otably at least 45 or 50 mm p to connect or integrate the pipe connector (40) which has a section (S) whose dimension measured according to the height of the lower part (19) of the cover is at least 35 mm, and in particular 40 mm.

2. Air filter according to claim 1, **characterized in that** a first seal (24) is interposed between said lower part (19) of said cover (16) and said tank (12).

3. Air filter according to claim 2, **characterized in that** said first seal (24) is carried by said filter cartridge (14).

4. Air filter according to claim 1, **characterized in that** a second seal (28) is interposed between said upper part (18) and said lower part (19) of said cover (16).

5. Air filter according to claim 4, **characterized in that** the said second seal (28) is carried by said upper part (18) of said cover (16).

6. Air filter according to claim 4 or 5, **characterized in**
**that** said second seal (28) extends according to a circumference of an interface junction (30) between said upper (18) and said portion lower (19) of said cover (16).

7. Air filter according to any one of the preceding claims, **characterized in that** said upper part (18) and said lower part (19) of said cover (16) are held tight in an assembled state by fasteners, in particular by mechanical means of the clipping, screwing or clamping type, preferably by clipping.

8. Air filter according to any one of the preceding claims, **characterized in that** the lower part (19) of the cover (16) and the tank (12) are held together by fixing members, in particular by mechanical means of clipping, screwing or of the clamp type, preferably by screws or clamps.

9. Air filter according to any one of the preceding claims, **characterized in that** a junction interface (30) between said upper part (18) and said lower part (19) of said cover (16) extends along a plane (P1), which is substantially parallel to a plane (P2) in which an opening of said tank (12) is located.

10. A method of removing an air filter (10) for an intake line of an internal combustion engine as defined in any one of the preceding claims, said method comprising, when an obstacle prevents simultaneous removal of the two parts (18,
19) of said cover (16) :
- a step of separation of e the said part top (18) of the lid said (16),
- a step of separating said lower part (19) from said cover (16), and
- an extraction step of the said filter cartridge (14).

11. Internal combustion engine, in particular for a motor vehicle, **characterized in that** it comprises an air filter (10) as defined according to any one of claims 1 to 9.
